# DEMANDE DE BREVET EUROPEEN

(11) **EP 0 669 206 A1**
(43) Date de publication de la demande: **30.08.1995**
(21) Numéro de dépôt: 95490005.6
(22) Date de dépôt: 22.02.1995
(51) Int. Cl.: B32B 27/06, B65D 77/20

(54) **Structure multicouche, destinée notamment à réaliser des opercules pour fermer des contenants**

(30) Priorité: 23.02.1994 FR 9402297
(71) Demandeur: LAWSON MARDON TRENTESAUX S.A., F-59200 Tourcoing (FR)
(72) Inventeur: Barras, Hugues, F-59200 Tourcoing (FR); Dugimont, Pascale, F-59200 Tourcoing (FR)
(74) Mandataire: Lepage, Jean-Pierre

(57) **Abrégé**

Structure multicouche (1), destinée notamment à réaliser des opercules (2) pour contenants.

Selon l'invention, cette structure (2) est constituée par deux couches externes (4, 5) d'un matériau thermo-plastique présentant des propriétés de résistance thermique et mécanique entre lesquelles est disposée au moins une couche (6) d'un matériau de rigidification.

Application au domaine de l'obturation de contenants divers, tels que par exemple des pots de yaourt ou similaires.

## Description

La présente invention a pour objet une structure multicouche, destinée notamment à réaliser des opercules pour fermer des contenants, tels que par exemple des pots de yaourt ou similaire, qui trouvera son application dans tous les secteurs de l'activité économique dans lesquels on doit avoir recours à de tels articles ainsi que chez les fabricants de ces structures.

Actuellement, pour réaliser de tels opercules, on connaît notamment deux techniques qui utilisent un matériau en feuille apte à être scellé sur le contenant en vue d'en assurer la fermeture.

De tels matériaux doivent en outre présenter d'une part des propriétés de résistance à la perforation et une bonne pelabilité lors de l'ouverture et, d'autre part, des propriétés de résistance thermique permettant leur thermo-scellage.

La première de ces techniques connues consiste à réaliser l'opercule du contenant à partir d'un matériau conditionné en rouleau.

Pour cela, on réalise le contenant par thermoformage d'une feuille de polystyrène puis, on le remplit et on le ferme par l'intermédiaire d'un opercule sur la ligne de conditionnement.

De tels opercules sont, notamment dans ce cas réalisés à partir de rouleaux d'aluminium ou de rouleaux d'un matériau stratifié bi-couche, constitué par une première couche de papier et une deuxième couche de polyester.

Après l'opération de scellage de l'opercule, les contenants sont séparés les uns des autres par un outil de découpe de manière à pouvoir être commercialisés.

La seconde technique connue consiste à réaliser des opercules pré-découpés que l'on conditionne dans un magasin de la machine de conditionnement puis à venir disposer ceux-ci sur les contenants préformés de formes diverses.

Dans ce cas, les opercules sont réalisés à partir d'une feuille d'aluminium d'une épaisseur d'environ 40 microns, dont l'une des faces est enduite par une laque thermo-scellable et dont l'autre face est généralement imprimée. De telles feuilles d'aluminium peuvent par ailleurs également être gaufrées et pré-découpées au format désiré.

En ce qui concerne l'utilisation des opercules réalisés à partir de films plastiques, ils sont en général très coûteux et posent des problèmes d'utilisation sur machine, tels que mauvais scellage ou résistance thermique insuffisante.

En ce qui concerne les opercules d'aluminium, ils présentent l'inconvénient de ne pas offrir toujours une pelabilité satisfaisante, c'est-à-dire que l'opercule se déchire souvent lors de l'ouverture du pot. Par ailleurs, ils ne sont pas d'une résistance toujours adaptée notamment à la perforation.

La présente invention a pour but de remédier à ces inconvénients en proposant une structure multicouche, destinée notamment à réaliser des opercules pour assurer la fermeture de contenants tels que par exemple des pots de yaourt ou similaires, qui présentent une résistance à la perforation et à la déchirure accrue.

Un autre but de la présente invention est également de proposer une structure multicouche qui permette de réaliser des opercules qui présentent une bonne résistance thermique, notamment dans la plage de températures de scellage comprise entre 200 et 300 °C, tout en pouvant être utilisée dans des chaînes de conditionnement classiques actuellement mises en oeuvre.

Un autre but de la présente invention est de proposer une structure multicouche qui permette de réaliser des opercules en séries pour un prix de fabrication compatible avec leur utilisation.

Un autre but de la présente invention est de proposer une structure multicouche qui présente une rigidité suffisante et un aspect de surface plan pouvant être empilée et "dépilée" pour permettre une bonne alimentation des machines de conditionnement.

D'autres buts et avantages de la présente invention apparaîtront au cours de la description qui va suivre qui n'est donnée qu'à titre indicatif et qui n'a pas pour but de la limiter.

A cet effet, selon l'invention, la structure multicouche, destinée notamment à réaliser des opercules pour contenants, tels que par exemple des pots de yaourt, est caractérisée par le fait qu'elle est constituée par deux couches externes d'un matériau thermo-plastique présentant des propriétés de résistance thermique et mécanique entre lesquelles est disposée au moins une couche d'un matériau de rigidification.

L'invention sera mieux comprise à la lecture de la description suivante accompagnée des dessins en annexe parmi lesquels :
- la figure 1 est une vue de dessus schématique qui illustre un opercule, réalisé à partir d'une structure conforme à l'invention, destinée à obturer un pot de yaourt par exemple,
- la figure 2 est une vue en coupe, selon la ligne II-II de la figure 1, qui illustre la structure conforme à l'invention.

La présente invention a pour objet une structure multicouche 1, destinée notamment à réaliser des opercules 2 de contenants de produits alimentaires ou non, tels que par exemple des pots de yaourt, qui trouvera son application dans tous les secteurs de l'activité économique, dans lesquels on doit utiliser de tels conditionnements, ainsi que chez les fabricants de telles structures.

Actuellement, pour réaliser des opercules, on utilise généralement des films d'aluminium qui n'offrent pas toujours une pelabilité suffisante ni une résistance à la perforation désirée.

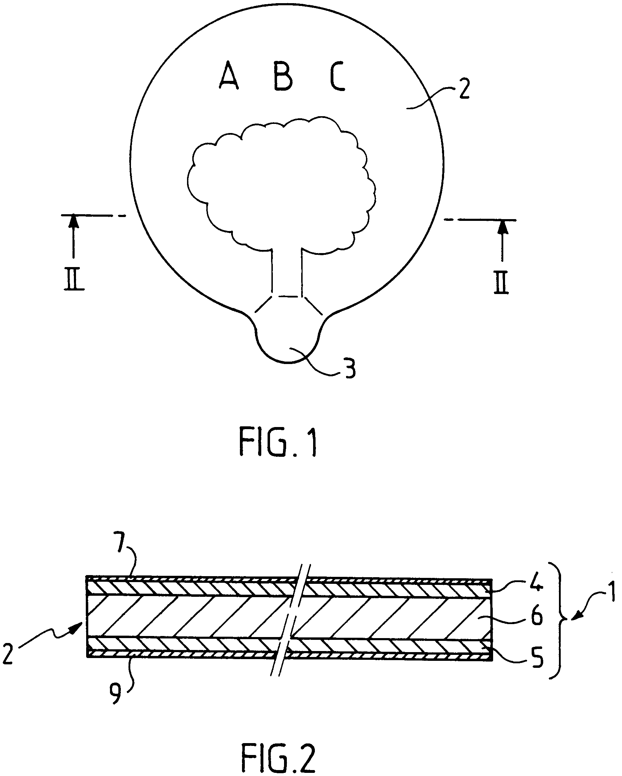

Pour remédier à ces inconvénients, selon l'invention, on fabrique une structure 1 multicouche, destinée à réaliser un opercule 2 pour obturer des contenants, tel que celui qui est plus particulièrement illustré à la figure 1, qui se présente ici sous une forme sensiblement circulaire et qui comporte ou non une languette 3 faisant saillie destinée à permettre l'ouverture de l'opercule 2 lorsqu'on désire avoir accès au produit disposé à l'intérieur du contenant.

Bien entendu, les dimensions et les formes de l'opercule 2 sont adaptées en fonction des besoins et notamment du type de contenant que l'on désire obturer.

En se référant plus particulièrement à la figure 2, on voit que la structure multicouche 1, conforme à l'invention comprend ici deux couches 4 et 5 externes réalisées dans un matériau thermo-plastique qui présente des propriétés de résistance thermique et mécanique entre lesquelles est disposée une couche 6 d'un matériau de rigidification. Elle est, en outre, avantageusement gaufrable.

Ainsi, selon une première variante de l'invention, on réalise une structure multicouche 1 symétrique, dont les deux couches externes 4 et 5 sont notamment identiques, ce qui permet de lui assurer une planéité accrue autorisant son utilisation dans les chaînes de conditionnement actuellement mises en oeuvre.

Par exemple, les couches 4 et 5 sont chacune réalisées à partir d'un film de polyester de manière à conférer à la structure 1 des propriétés mécaniques et thermiques accrues. Bien entendu, la dimension de chaque couche 4 et 5 est variable en fonction des besoins, mais, on a obtenu notamment de bons résultats avec des couches 4 et 5 qui présentent chacune une épaisseur de 12 microns.

Par ailleurs, les matériaux constitutifs des couches 4 et 5 doivent présenter des propriétés de résistance mécanique et thermique, notamment dans des plages thermiques de thermo-scellage adaptées aux besoins et c'est ainsi que l'on pourrait aussi avoir recours à des matériaux du type polyimide, tel que connu sous le nom de Kapton ou à tout autre matériau équivalent.

Dans une autre variante, les dites deux couches externes 4 et 5 sont de natures différentes, la première couche 4 est par exemple avantageusement constituée par un film de polyester, tel qu'un PET, et la seconde couche 5 est formée, notamment, d'un film de polyéthylène.

Ainsi, plus généralement, la ou les dites couches externes (4, 5) sont réalisées en polyester, et/ou en polyamide ou/et en polyéthylène, les deux couches pouvant être du même matériau ou non.

Cela étant, la couche 6, intercalée entre les dites deux couches 4 et 5, constitue une couche de rigidification dont l'épaisseur et la nature du matériau dans laquelle elle est réalisée, sont également variables en fonction des besoins et des applications. Une telle structure favorise le gaufrage de la structure afin de faciliter les dépilages des opercules sur machines.

Il peut par exemple s'agir d'une couche de papier frictionné, notamment d'un grammage d'environ 60 g/m², ou bien d'une couche d'un matériau plastique, tel que par exemple un film de polypropylène notamment d'une épaisseur de 35 microns, ou encore de polyéthylène ou polyamide.

La couche 6 est par ailleurs réalisée dans un matériau dont le prix est compatible avec la fabrication d'opercules, elle est adaptée pour offrir à la structure une rigidité suffisante et une bonne aptitude à la découpe par des moyens classiques.

En outre, cette couche 6 est également prévue pour favoriser le gaufrage de la structure de manière à ce qu'elle puisse être utilisée dans des machines de conditionnement en facilitant l'alimentation des opercules en évitant notamment leur collage lorsqu'ils sont disposés en piles dans le magasin d'alimentation.

Cela étant, la couche externe 4 peut être, comme illustrée à la figure 2, imprimée en surface par des encres recouvertes d'une couche 7 d'un vernis ou d'une laque de protection.

Cette impression peut également se faire sur la face interne de la couche 4 de sorte que celle-ci puisse être visible par transparence. Dans ce cas, la surface extérieure comportera éventuellement une couche d'un vernis protecteur apte au marquage où elle aura subi un traitement de surface de manière à la rendre imprimable.

En ce qui concerne la couche 5, elle peut être également recouverte par une couche 9 d'une laque thermoscellante de manière à favoriser la soudure de l'opercule 2 sur le pot.

Bien entendu, la structure multi-couche 1 conforme à l'invention pourrait, en fonction des besoins, comporter un nombre plus élevé de couches, disposées selon une répartition appropriée et dont les dimensions seraient également adaptées pour assurer à cette structure des propriétés de résistance mécanique et thermique désirées tout en lui conférant une planéité suffisante pour lui assurer une alimentation correcte dans les machines de conditionnement.

## Revendications

1. Structure multicouche (1), destinée notamment à réaliser des opercules (2) pour contenants, tels que par exemple des pots de yaourt, caractérisée en ce qu'elle est constituée par deux couches externes (4, 5) d'un matériau thermo-plastique présentant des propriétés de résistance thermique et mécanique entre lesquelles est disposée au moins une couche (6) d'un matériau de rigidification.

2. Structure multicouche selon la revendication 1, caractérisée en ce qu'elle est gaufrable.

3. Structure multicouche selon la revendication 1, caractérisée en ce que la ou les dites couches externes (4, 5) sont réalisées en polyester, et/ou ou en polyimide et/ou en polyéthylène.

4. Structure multicouche selon la revendication 1, caractérisée en ce que les couches externes (4, 5) présentent une épaisseur variable en fonction des besoins.

5. Structure multicouche selon la revendication 1, caractérisée en ce que le matériau de rigidification est constitué par une feuille de papier.

6. Structure multicouche selon la revendication 1, caractérisée en ce que le matériau de rigidification est constitué par une feuille d'une matière plastique.

7. Structure multicouche selon la revendication 6, caractérisée en ce que le film de matière plastique est du polypropylène, polyéthylène ou polyimide.

8. Structure multicouche selon la revendication 1, caractérisée en ce qu'elle se présente sous la forme de:
- une première couche (4) de polyester,
- une couche intercalaire (6) de papier ou polypropylène, polyéthylène ou polyimide,
- une seconde couche (5) de polyester.

9. Structure multicouche selon la revendication 1, caractérisée en ce qu'elle se présente sous la forme de:
- une première couche (4) de polyester,
- une couche intercalaire (6) de papier ou polypropylène, polyéthylène ou polyimide,
- une seconde couche de polyéthylène.
